# EUROPÄISCHE PATENTSCHRIFT

(11) **EP 2 674 022 B1**
(45) Veröffentlichungstag und Bekanntmachung des Hinweises auf die Patenterteilung: **05.08.2015**
(21) Anmeldenummer: 13162661.6
(22) Anmeldetag: 08.04.2013
(51) Int. Cl.: A01D 89/00

(54) **Aufnahmevorrichtung für eine landwirtschaftliche Erntmaschine**
Pick up device for an agricultural harvesting machine
Dispositif de ramassage pour machine agricole de récolte

(30) Priorität: 12.06.2012 DE 102012011476
(43) Veröffentlichungstag der Anmeldung: 18.12.2013
(73) Patentinhaber: Usines CLAAS France, 57141 Metz (FR)
(72) Erfinder: Scharf, Thorsten, 66693 Orscholz (DE)

(56) Entgegenhaltungen:
- EP-A1- 1 741 330
- EP-A1- 1 790 206
- DE-A1- 4 102 034
- DE-A1- 19 750 954

## Beschreibung

Die vorliegende Erfindung betrifft eine Aufnahmevorrichtung für eine landwirtschaftliche Erntemaschine zum Aufsammeln von am Boden liegenden Erntegut, insbesondere von bereits gemähtem und geschwadetem Erntegut wie etwa Heu oder Stroh.

Eine solche auch als Pickup bezeichnete Aufnahmevorrichtung umfasst herkömmlicherweise eine mit abstehenden Zinken besetzte Aufsammeltrommel, die um eine horizontale Achse drehangetrieben ist, so dass ihre Zinken über den Boden streichen und dabei das Erntegut vor sich herschieben und es schließlich, im Laufe ihrer Drehung um die Achse, anheben. Fliehkraft und die nach dem Erfassen des Ernteguts zunächst zum Boden hin abschüssige Orientierung der Zinken führen dazu, dass ein Teil des von den Zinken erfassten Ernteguts nicht sofort von der Aufsammeltrommel mitgenommen wird, sondern von den Zinken abgleitet und vor der Aufsammeltrommel wieder zu Boden fällt. Wenn die Aufnahmevorrichtung über eine abzusammelnde Bodenfläche geführt wird, staut das Erntegut sich deshalb zunächst vor der Aufsammeltrommel, und erst wenn die Schicht des Ernteguts vor der Aufsammeltrommel dick genug ist, d.h. wenn das Erntegut in etwa bis hin die Höhe von deren Drehachse reicht, wird es effizient aufgesammelt.

Um die Effizienz des Aufsammelvorgangs zu verbessern und insbesondere die Menge des Ernteguts zu verringern, die von den rotierenden Zinken lediglich nach vorn geschleudert wird, ohne aufgenommen zu werden, ist es bekannt, die Aufsammeltrommel mit einem Niederhalter zu kombinieren, der sich über der Aufsammeltrommel erstreckt, um das Abschleudern von Erntegut zu verhindern und im Zusammenwirken mit der rotierenden Aufsammeltrommel das Erntegut einem Erntegutkanal zuzuführen. Um den Eintritt des Ernteguts in den Kanal zu erleichtern und einen reibungsarmen, glatten Ernteguttransport zu ermöglichen, kann ein solcher Niederhalter, wie z.B. in EP 1 790 206 A1 gezeigt, eine oder mehrere Rollen aufweisen, die den Erntegutkanal begrenzen und von dem hindurchgeförderten Erntegut durch Reibkontakt mitgenommen werden können. Mechanische oder hydraulische Stellglieder ermöglichen eine Anpassung des Auflagedrucks der Niederhalterrollen an die Ernteguteigenschaften..

Um den Auflagedruck der Niederhalterrollen so an die Ernteguteigenschaften anpassen zu können, dass ein störungsfreier Erntegutfluss erreicht wird, müssen die Ernteguteigenschaften bekannt sein und bei der Einstellung der Stellglieder berücksichtig werden können. Ungleichmäßigkeiten der Schichtdicke des aufzusammelnden Ernteguts können hier zu erheblichen Schwierigkeiten führen, da eine laufende Nachregelung der Niederhalterstellung in Anpassung an wechselnde Schichtdicken ein hohes Maß an Aufmerksamkeit vom Fahrer der Erntemaschine erfordert und die Schichtdicke aus der Perspektive des Fahrers, selbst wenn dieser die erforderliche Aufmerksamkeit aufbringt, schwierig abzuschätzen ist. Wenn die Schicht des aufzusammelnden Ernteguts lokal zu dick ist und die Aufnahmekapazität der Pickup überschreitet, dann staut sich das Erntegut vor der Pickup auf und verstopft letztlich deren Erntegutkanal. Ist die Schichtdicke des aufzusammelnden Ernteguts hingegen zu gering, dann nimmt die Wirksamkeit des Niederhalters und damit der Fluss durch den Erntegutkanal ab. Auch dadurch staut sich das Erntegut vor der Pickup, bis genügend vorhanden ist, um wieder effizient aufgenommen zu werden. Der Fluss durch den Erntegutkanal wird instabil, und Ungleichmäßigkeiten der Verteilung erhöhen auch hier das Risiko einer Verstopfung

Eine Vorrichtung mit den Merkmalen des Oberbegriffes der Anspruchs 1 ist aus der EP-A-1750206 bekannt.

Aufgabe der Erfindung ist, eine Aufnahmevorrichtung anzugeben, bei der ein gleichmäßiger und zuverlässiger Guttransport trotz eventuell wechselnder Schichtdicken des aufsammelnden Ernteguts gewährleistet ist.

Die Aufgabe wird gelöst, indem bei einer Aufnahmevorrichtung für eine landwirtschaftliche Erntemaschine mit einer Aufsammeltrommel zum Aufsammeln von am Boden liegenden Erntegut, einem Erntegutkanal, der das aufgesammelte Erntegut aufnimmt, der durch einen Niederhalter begrenzt ist und dessen Weite durch Verstellen des Niederhalters veränderbar ist, wenigstens einem Antriebsaggregat zum Antreiben der Aufsammeltrommel und einem dem Niederhalter zugeordneten Stellglied das Stellglied mit einem Mittel zum Erfassen einer Last des Antriebsaggregats verbunden ist, um die Weite des Erntegutkanals entsprechend der Last einzustellen.

Die Erfindung geht davon aus, dass die Last des Antriebsaggregats abhängig ist von der Menge des pro Zeiteinheit aufzusammelnden Ernteguts sowie von den Transportverhältnissen im Erntegutkanal. Sowohl eine hohe Menge an aufzusammelndem Erntegut als auch eine Neigung des Ernteguts, den Erntgutkanal zu verstopfen, erhöhen die Last des Antriebsaggregats, insbesondere, wenn dieses nicht lediglich die Aufsammeltrommel, sondern darüber hinaus auch Fördermittel des Erntegutkanals antreibt. Indem im Falle einer solchen hohen Last die Weite des Erntegutkanals vergrößert wird, kann sowohl die Verstopfungsneigung beseitigt als auch die Förderkapazität für das aufzusammelnde Erntegut vergrößert werden. Indem sich auf diese Weise die Weite des Erntegutkanals selbsttätig der Schichtdicke des aufzusammelnden Ernteguts anpasst, können Schwankungen der Fördereffektivität und daraus resultierende Staus des Ernteguts vermieden werden.

Einer bevorzugten Ausgestaltung zufolge umfasst das Antriebsaggregat wenigstens einen Hydromotor zum Antreiben wenigstens der Aufsammeltrommel. Als Stellglied kann dann zweckmäßigerweise ein hydraulisches Stellglied verwendet werden, und als Mittel zum Erfassen der Last genügt eine Leitung, die sich zwischen einem hochdruckseitigen Anschluss des Hydromotors und dem Stellglied erstreckt, um den aus der Last resultierenden Staudruck am Eingang des Hydromotors an das Stellglied anzulegen.

Eine von dem Stellglied zum Erweitern des Erntegutkanals aufzubringende Kraft sollte zweckmäßigerweise mit der Weite des Erntegutkanals zunehmen, damit unterschiedliche an dem Stellglied anliegende Drücke auch zu jeweils angepassten unterschiedlichen Weiten des Erntegutkanals führen.

Ein solcher Zusammenhang zwischen der Kraft des Stellglieds und der Weite des Erntegutkanals ist realisierbar mit Hilfe eines Federelements, das mit dem Niederhalter verbunden ist, um durch das Anheben des Niederhalters elastisch verformt zu werden.

Wenn der Niederhalter zum Verändern der Weite des Erntegutkanals um eine Achse schwenkbar ist, kann ein Zusammenhang zwischen vom Stellglied ausgeübter Kraft und daraus resultierender Kanalweite auch dadurch erzielt werden, dass die wirksame Hebelarmlänge des Stellglieds in Bezug auf die Achse mit der Weite des Kanals abnimmt.

In der den hochdruckseitigen Anschluss mit dem hydraulischen Stellglied verbindenden Leitung kann ein Wegeventil vorgesehen sein, dass zwischen einer ersten Stellung, in der es den hochdruckseitigen Anschluss mit dem hydraulischen Stellglied verbindet, und einer zweiten Stellung umschaltbar ist, in der es das hydraulische Stellglied drucklos hält oder sperrt.

Um einen eventuell doch noch auftretenden Stau in der Aufnahmevorrichtung, z.B. aufgrund eines mit dem Erntegut aufgenommenen Fremdkörpers, leicht wieder beseitigen zu können, ist es wünschenswert, die Förderrichtung des Erntgutkanals umkehren zu können.

Bei einem Hydromotor kann zu diesem Zweck von zwei Anschlüssen wahlweise der eine oder der andere als Hochdruckanschluss schaltbar sein. In diesem Fall ist vorzugsweise ein Ventil durch eine zwischen den beiden Anschlüssen anliegende Druckdifferenz steuerbar, um den jeweils als Hochdruckanschluss geschalteten Anschluss mit dem Stellglied zu verbinden und so eine geeignete Stellung des Niederhalters auch bei Rückwärtslauf des Hydromotors zu gewährleisten.

Um die Reibung des Ernteguts zu verringern, umfasst der Niederhalter vorzugsweise wenigstens eine an dem Erntegutkanal angrenzende Rolle. Wenn die Rolle drehangetrieben ist, kann die Reibung nicht nur auf null gebracht werden, sondern die Rolle kann ihrerseits zum Transport des Ernteguts beitragen.

Auch bei einer solchen angetriebenen Rolle kann die Drehrichtung umschaltbar sein, um die Beseitigung eines Staus zu erleichtern.

Die Rolle oder eine Rolle des Niederhalters kann vor der Aufsammeltrommel angeordnet sein, um Erntegut gegen den Boden zu drücken, es dort zu verdichten, und so seine Aufnahme durch die Aufsammeltrommel zu effektivieren.

Einer bevorzugten Ausgestaltung zufolge umfasst der Niederhalter einen Arm, an dem das hydraulische Stellglied angreift, und eine zweite Rolle, wobei bei unbeweglich gehaltenem Arm die zwei Rollen in Weitenrichtung des Kanals gegeneinander beweglich sind. So kann sich die Kanalweite lokal an unterschiedliche Schichtdicken des hindurch geförderten Ernteguts anpassen.

Um die Weite des Kanals in Höhe der ersten und der zweiten Rolle unabhängig voneinander verändern zu können, ist vorzugsweise wenigstens eine der Rollen an den Arm über einen schwenkbaren Träger angelenkt.

Vorzugsweise handelt es sich dabei um die vordere Rolle. Deren Schwenkachse kann insbesondere mit der Drehachse der hinteren Rolle zusammenfallen.

Denkbar ist aber auch, beide Rollen an dem Träger zu montieren, wobei die Schwenkachse des Trägers zwischen den Achsen der Rollen verläuft.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen schematischen Längsschnitt durch eine Aufnahmevorrichtung gemäß der vorliegenden Erfindung;
- Fig. 2: eine Draufsicht auf die Aufnahmevorrichtung;
- Fig. 3: eine schematische Seitenansicht der Aufnahmevorrichtung;
- Fig. 4: ein Hydraulikdiagramm der Aufnahmevorrichtung.

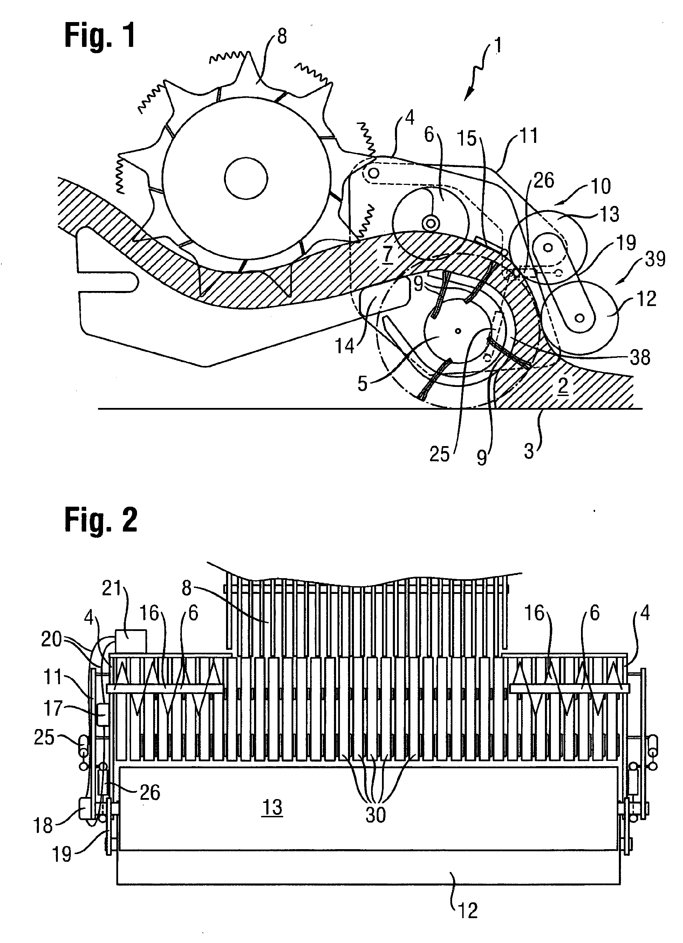

Fig. 1 zeigt eine erfindungsgemäße Aufnahmevorrichtung in einem schematischen Längsschnitt. Die Aufnahmevorrichtung 1 ist an einer landwirtschaftlichen Erntemaschine, z.B. einem Schlepper, einer Ballenpresse, einem Feldhäcksler oder dergleichen, montiert, um von diesem in Richtung der Schnittebene über eine mit aufzusammelnden Erntegut 2 bedeckte Bodenfläche 3 geführt zu werden. Die Aufnahmevorrichtung 1 umfasst eine zwischen Seitenwandplatten 4 eines lösbar an der Erntemaschine befestigten Gestells drehbar gelagerte Aufsammeltrommel 5, eine Schnecke 6 und einen Niederhalter 10. Von der landwirtschaftlichen Erntemaschine, hier einer Ballenpresse, ist in Fig. 1 nur ein kleiner Teil, insbesondere ein Schneidrotor 8 zum Zerkleinern des von der Aufnahmevorrichtung zugeführten Ernteguts, zu sehen.

Die Aufsammeltrommel 5 ist über ihre gesamte Länge verteilt mit radial abstehenden Zinken 9 besetzt. Die Zinken 9 können an einem Mantel der Aufsammeltrommel 5 starr befestigt sein; sie können auch gekoppelt an die Drehung der Aufsammeltrommel 5 relativ zu deren Mantel beweglich sein, um etwa, wenn sie sich an einer der Bodenfläche 3 zugewandten Seite des Trommelmantels befinden, weit vorzuspringen und sich im Laufe der weiteren Drehung allmählich in die Trommel zurückzuziehen und so die Freigabe von mitgenommenem Erntegut und dessen Weiterleitung in den Erntegutkanal 7 an einer Oberseite der Aufsammeltrommel 5 zu erleichtern, oder um, wie in der Fig. 1 gezeigt, einen die Seitenwandplatten 4 verbindenden Querträger 14 des Gestells passieren zu können. Um die Aufsammeltrommel 5 herum sind in deren Längsrichtung gestaffelt zahlreiche - hier im Querschnitt hufeisenförmige - Abstreiferelemente 38 angeordnet, die das Erntegut auf seinem Weg durch den Erntegutkanal 7 führen und zwischen einander Spalte begrenzen, durch die die Zinken 9 in den Erntegutkanal 7 eingreifen.

Der Niederhalter 10 begrenzt einen Eingangsbereich des Erntegutkanals 7 oberhalb der Aufsammeltrommel 5. Einer elementaren Ausgestaltung zufolge umfasst er zwei um eine Achse schwenkbar an den Seitenwandplatten 4 montierte Arme wie etwa den in der Fig. 1 gezeigten Arm 11 und eine zwischen diesen Armen montierte Niederhalterrolle 12. Gemäß dem in Fig. 1 gezeigten Ausführungsbeispiel ist an jeden Arm 11 ein Träger 19 angelenkt, und die zwei Träger 19 halten zwischen einander eine weitere Rolle 13, so dass die Anordnung aus Trägern 19 und Rolle 13 wiederum als ein - an die Arme 11 anstatt an die Seitenwandplatten 4 angelenkter - zweiter Niederhalter 39 aufgefasst werden kann.

Zwei hydraulische Stellglieder 25 greifen einerseits an den Seitenwandplatten 4 und andererseits an den Armen 11 an, um den Abstand des Niederhalters 10 von der Aufsammeltrommel 5 einzustellen. Zwei weitere Stellglieder 26 verbinden die Arme 11 mit den Trägern 19 und wirken auf den zweiten Niederhalter 39, d.h. sie erlauben es, den Abstand der vorderen Niederhalterrolle 12 von der Aufsammeltrommel 5 unabhängig vom Abstand zwischen der hinteren Niederhalterrolle 13 und der Aufsammeltrommel 5 zu variieren und so die Aufnahmevorrichtung für die Aufnahme von Erntegut mit unterschiedlichen mechanischen Eigenschaften wie Elastizität, Sprödigkeit, Stauchbarkeit zu optimieren.

Der Niederhalter 10 kann ferner ein Niederhalterblech aufweisen, das den Zwischenraum zwischen den Niederhalterrollen 12, 13 ausfüllt, falls dies erforderlich ist, um zu verhindern, dass Erntegut im Zwischenraum zwischen den Niederhalterrollen 12, 13 hängenbleibt oder durch diesen entweicht. Außerdem kann ein Stabgitter 15 den Abstand zwischen der Niederhalterrolle 13 und der Schnecke 6 überbrücken.

Wie in der Draufsicht der Fig. 2 deutlich wird, besteht die Schnecke 6 aus zwei jeweils einseitig fliegend an den Seitenwandplatten 4 gelagerten, mit zueinander spiegelbildlichen Wendeln 16 besetzten Teilen, durch deren Drehung das von der Aufsammeltrommel 5 über die gesamte Breite der Aufnahmevorrichtung 1 hinweg aufgesammelte Erntegut von den Seitenwandplatten 4 zur Mitte der Aufnahmevorrichtung 1 zusammengeschoben wird, um anschließend an den erheblich kürzeren Schneidrotor 8 übergeben zu werden. Alternativ könnten auch zwei spiegelbildliche Wendeln an einem sich durchgehend zwischen den Seitenwandplatten 4 erstreckenden Kern vorgesehen sein.

Zwei Hydromotoren 17, 18 sind koaxial zur Aufsammeltrommel 5 und zur hinteren Niederhalterrolle 13 an einer der Seitenwandplatten 4 bzw. der Seitenwände 11 montiert, um die Aufsammeltrommel 5 bzw. die Niederhalterrolle 13 direkt anzutreiben. Die vordere Niederhalterrolle 12, die an die Arme 11 über zwei um die Achse der Niederhalterrolle 13 schwenkbare Träger 19 angelenkt ist, ist von dem Hydromotor 18 mittelbar, z.B. über eine in dem Träger 19 umlaufende Kette, angetrieben.

Eine Hydraulikölleitung 20 verbindet die Hydromotoren 17, 18 in Reihe mit einer Pumpe 21, die von der Erntemaschine aus mechanisch, z.B. über eine Zapfwelle, angetrieben ist.

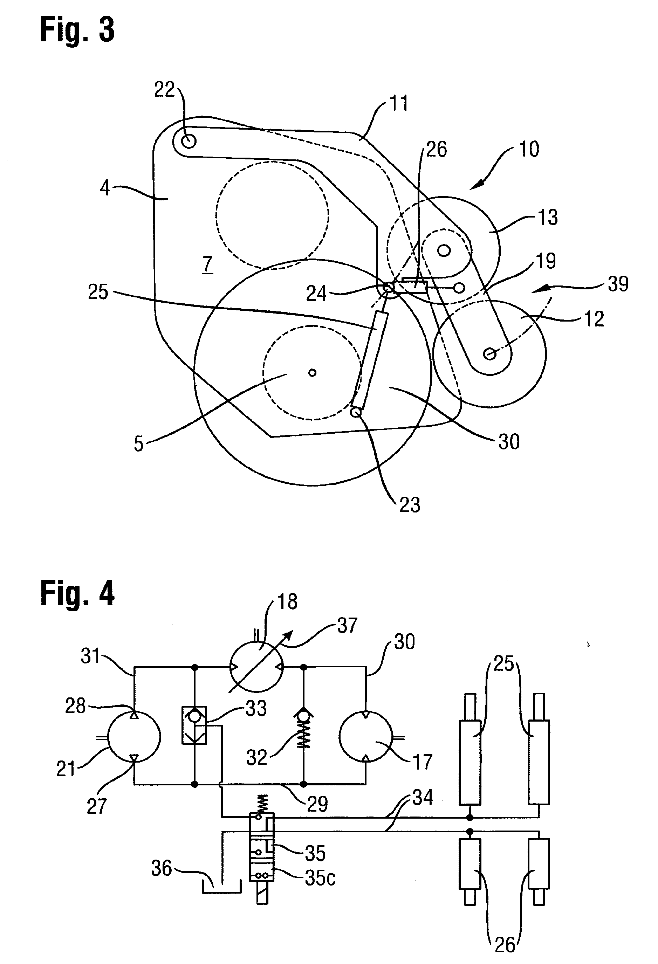

Fig. 3 verdeutlicht noch einmal schematisch den mechanischen Aufbau der Aufnahmevorrichtung anhand einer Seitenansicht. Zu sehen ist eine der Seitenwandplatten 4, an der die Aufsammeltrommel 5 und der Niederhalter 10 gelagert sind. Die Arme 11 des Niederhalters 10 (von denen in der Fig. nur einer sichtbar ist) sind mit der Seitenwandplatte 4 über ein zu deren hinterem Rand benachbartes Gelenk 22 verbunden, und die Stellung des Arms 11 ist gesteuert durch das hydraulische Stellglied 25, das bei 23 an die Seitenwand 4 und bei 24 an den Arm 11 angelenkt ist. In der in Fig. 3 dargestellten Konfiguration bilden die Gelenke 22, 23, 24 ein Dreieck, das am Gelenk 24 einen stumpfen Winkel aufweist. D.h. die vom Stellglied 25 ausgeübte Kraft ist in stumpfwinklig zu dem sich zwischen den Gelenken 22, 24 erstreckenden Hebelarm orientiert. Wenn das Stellglied 25 ausgefahren wird, beschreibt das Gelenk 24 einen Kreisbogen, und der von ihm gebildete Winkel wird immer spitzer, d.h. der wirksame Hebelarm, mit dem das Stellglied 25 am Arm 11 angreift, wird kürzer. Infolgedessen hebt das Stellglied 25 den Arm 11 umso höher (und macht dementsprechend den Erntgutkanal 7 umso weiter), je höher der Druck des ihm zugeführten Hydrauliköls ist.

Es könnten zwischen den Seitenwandplatten 4 und den Armen 11 auch Federn vorgesehen sein, die umso stärker elastisch verformt werden, je weiter die Stellglieder 25 den Niederhalter 10 anheben. Auch durch deren mit der Anhebung des Niederhalters 10 zunehmende Rückstellkraft ist eine Abhängigkeit der Weite des Erntgutkanals 7 vom Druck des Hydrauliköls realisierbar.

Im Einsatz wird ein Teil des Gewichts des Niederhalters 10 von dem Erntegut aufgenommen, das zwischen der Niederhalterrolle 12 und der Bodenfläche 3 vorverdichtet wird oder zwischen der Niederhalterrolle 13 und der Aufsammeltrommel 5 durchläuft. Je steifer und je dicker die Schicht dieses Erntguts ist, umso größer ist der von ihr getragene Gewichtsanteil, und umso höher kann das Stellglied 25 bei gegebenem Druck des Hydrauliköls den Niederhalter 10 anheben. So passt sich die Weite des Erntegutkanals 7 selbsttätig an die Dicke und Komprimierbarkeit des Ernteguts an.

Die Tatsache, dass die vordere Niederhalterrolle 12 mit Hilfe der Träger 19 gelenkig mit den Armen 11 verbunden ist, eröffnet die Möglichkeit zu noch weitergehender Anpassung an die Eigenschaften des Ernteguts. In Fig. 1 und 3 ist die vordere Niederhalterrolle 12 jeweils in der nahezu tiefstmöglichen Stellung gezeigt, die sie erreichen kann, ohne mit dem Zinken 9 der Aufsammeltrommel 5 zusammenzustoßen. In dieser Stellung ist nicht nur die Weite des Erntegutkanals 7 zwischen der Niederhalterrolle 12 und der Aufsammeltrommel 5 minimal, sondern auch der Abstand der Niederhalterrolle 12 von der Bodenfläche 3. Eine solche Stellung der Niederhalterrolle 12 ist angemessen, wenn die Schichtdicke des aufzusammelnden Ernteguts auf der Bodenfläche 3 nicht so hoch ist, dass es zu einem Stau des Ernteguts bereits vor der Niederhalterrolle 12 kommen kann, und wenn das Erntegut leicht komprimierbar ist, so dass es ohne Schwierigkeiten den engen Spalt zwischen der Niederhalterrolle 12 und der Aufsammeltrommel 5 passiert.

Wenn die Schichtdicke des Ernteguts hoch ist, oder das Erntegut schwer komprimierbar, dann kann es zweckmäßig sein, die vordere Niederhalterrolle 12 mit Hilfe des Stellglieds 26 nach vorn zu schwenken und dabei anzuheben. Auf diese Weise verbreitert sich der Spalt zwischen der Niederhalterrolle 12 und der Aufsammeltrommel 5, und er kann insbesondere weiter werden als der zwischen der hinteren Niederhalterrolle 13 und der Aufsammeltrommel 5. Durch die Anhebung der Niederhalterrolle 12 wird die Gefahr eines Staus von Erntegut vor der Niederhalterrolle 12 vermieden, außerdem muss eine Verdichtung des Ernteguts nicht mehr nur zwischen der vorderen Niederhalterrolle 12 und der Aufsammeltrommel 5 erfolgen, sondern verteilt sich auf beide Niederhalterrollen 12, 13. So kann auch mit hoher Schichtdicke ausliegendes oder schwer komprimierbares Erntegut effizient aufgenommen werden.

Fig. 4 zeigt schematisch das Hydrauliksystem der Aufnahmevorrichtung 1. Die Pumpe 21 umfasst zwei Anschlüsse 27, 28, zwischen denen die Hydromotoren 17, 18 über Abschnitte 29, 30, 31 der Leitung 20 in Reihe verbunden sind. Ein Rückschlagventil 32 ist parallel zum Hydromotor 17 zwischen die Leitungsabschnitte 29, 30 geschaltet und so orientiert, dass es bei normalem Betrieb, wenn der Öldruck auf dem Leitungsabschnitt 29 höher ist als auf dem Abschnitt 30, sperrt. In diesem Zustand rotieren bezogen auf die Darstellung der Fig. 1 und 3 die Aufsammeltrommel 5 im Gegenuhrzeigersinn und die Niederhalterrollen 12, 13 im Uhrzeigersinn, um das Erntegut 2 vom Boden 3 aufzunehmen und dem Erntegutkanal 7 zuzuführen.

Ein Wechselventil 33 hat mit den Leitungsabschnitten 29, 31 verbundene Eingänge und einen Ausgang, der über eine Leitung 34 zu den auf beiden Seiten der Aufnahmevorrichtung an den Seitenwandplatten 4 und Armen 11 montierten hydraulischen Stellgliedern 25 und 26 führt. Ein in der Leitung 34 angeordnetes Wegeventil 35 ist in der Figur in einer Sperrstellung gezeigt, in welcher die Stellglieder 25 drucklos und mit einem Tank 36 für Hydrauliköl verbunden und die Stellglieder 26 gesperrt sind. In diesem Zustand bilden die Arme 10 und die daran angelenkten Träger eine starre Einheit, und der Niederhalter 10 liegt mit maximalem, durch sein Eigengewicht vorgegebenem Druck auf dem Erntegut am Boden 3 bzw. im Kanal 7 auf. Das Wegeventil 35 ist in eine offene Stellung umschaltbar, in der die Stellglieder 25, 26 über das Wechselventil 33 jeweils untereinander und mit demjenigen der Leitungsabschnitte 29, 31 verbunden sind, der den höheren Druck führt. Im Normalbetrieb ist dies, wie in Fig. 4 dargestellt, der Leitungsabschnitt 29. Wenn auf diesem der Druck steigt, weil die Aufsammeltrommel 5 gegen einen hohen Widerstand arbeitet, dann fahren einerseits die Stellglieder 25 aus, wodurch der Niederhalter 10 als ganzes angehoben wird, gleichzeitig schwenken die Stellglieder 26 die Rolle 12 nach vorn und erweitern dadurch den Eingangsbereich des Erntegutkanals 7 noch zusätzlich.

Es ist eine vereinfachte Ausgestaltung denkbar, bei der jeweils nur die Stellglieder 25 über die Leitung 34 mit einem lastabhängigen Druck beaufschlagt werden, während die Stellglieder 26 im Betrieb abgesperrt sind oder auf anderem Wege als über den in Fig. 4 gezeigten Hydraulikkreis druckbeaufschlagt sind. Wenn gewünscht, kann auch das Wegeventil 35 eine Schaltstellung, mit der ein solcher Zustand realisierbar ist, in Fig. 4 dargestellt als Kästchen 35c, aufweisen.

Genauso könnte die Stellung der Arme 11 im Betrieb durch Absperren der Stellglieder 25 festgehalten und eine lastabhängige Verstellung nur des zweiten Niederhalters 39 vorgesehen werden.

Wenn der Erntegutkanal 7 blockiert ist, kann der Fahrer des Trägerfahrzeugs mit Hilfe einer nicht dargestellten, trägerfahrzeugseitigen Schaltvorrichtung die Drehrichtung der die Pumpe 21 antreibenden Zapfwelle umkehren. In diesem Fall führt der Leitungsabschnitt 31 den höheren Druck, und indem dieser Druck über das Wechselventil 33 und die Leitung 34 auch an den Stellgliedern 25 und/oder 26 anliegt, bestimmt er die Stellung der Arme 11 bzw. der Träger 19. Das Öl fließt nun vom Anschluss 28 über den Hydromotor 18 und überwiegend über das Rückschlagventil 32 zum Anschluss 27. Da so nur die Niederhalterrollen 12, 13 angetrieben sind, sind die Zinken 9 der Aufsammeltrommel 5 vor einer Beschädigung durch Überbeanspruchung geschützt. Je fester der Stau im Erntegutkanal 7 ist, umso höher ist der Druck, der sich auf den Leitungsabschnitt 31 aufbaut, bis die Rollen 12, 13 das Erntegut rückwärts aus dem Erntegutkanal 7 herauszuschieben beginnen, und umso weiter spreizen die Stellglieder 25 und/oder 26 die Rollen 13, 12 von der Aufsammeltrommel 5 fort. Die daraus resultierende Aufweitung des Erntegutkanals 7 erleichtert die Behebung des Staus.

Wenn durch die so angetriebene Drehung der Niederhalterrollen 12, 13 im Gegenuhrzeigersinn Erntegut aus dem Kanal 7 entgegen der normalen Förderrichtung wieder hinausgeschoben wird, kommen die Zinken 9 frei, dem Druck des sich bewegenden Ernteguts nachzugeben. Die Aufsammeltrommel 5 ist frei, im Uhrzeigersinn zu rotieren. Ihre Drehung wird durch die Druckverhältnisse in der Leitung 20 nicht behindert; sie bewirkt lediglich, dass ein Teil des zirkulierenden Öls nicht durch das Rückschlagventil 32, sondern durch den Hydromotor 17 fließt.

Das Rückschlagventil 32 kann gleichzeitig die Funktion einer Drossel oder eines Druckentlastungsventils haben. Eine daraus resultierende Druckdifferenz zwischen den Leitungsabschnitten 29, 30 erleichtert die Drehung der Aufsammeltrommel 5 im Gegenuhrzeigersinn oder kann sogar dazu führen, dass die Zinken 9 ihrerseits einen Schub auf das Erntegut im Kanal 7 ausüben, doch kann diese Druckdifferenz niedrig genug bemessen werden, um eine Beschädigung der Zinken 9 im Falle einer Blockade durch das Erntegut sicher auszuschließen.

Wenn die Schluckmenge beider Hydromotoren 17, 18 fest ist, dann stehen auch die Drehzahlen von Aufsammeltrommel 5 und Niederhalterrollen 12, 13 in einem festen Verhältnis. Die Drehzahlen selber sind proportional zur Rate, mit der das Öl vom Trägerfahrzeug aus eingespeist wird.

Am Hydromotor 18 kann ein von Hand betätigbares Stellelement 37 zum Verstellen der Schluckmenge vorgesehen sein; es bietet die Möglichkeit, das Drehzahlverhältnis von Aufsammeltrommel 5 und Niederhalterrollen 12, 13 so abzustimmen, dass optimale Förderergebnisse erzielt werden.

### Bezugszeichen

- 1: Aufnahmevorrichtung
- 2: Erntegut
- 3: Bodenfläche
- 4: Seitenwandplatte
- 5: Aufsammeltrommel
- 6: Schnecke
- 7: Erntegutkanal
- 8: Schneidrotor
- 9: Zinken
- 10: Niederhalter
- 11: Arm
- 12: Niederhalterrolle
- 13: Niederhalterrolle
- 14: Querträger
- 15: Stabgitter
- 16: Wendel
- 17: Hydraulikmotor
- 18: Hydraulikmotor
- 19: Träger
- 20: Hydraulikölleitung
- 21: Pumpe
- 22: Gelenk
- 23: Gelenk
- 24: Gelenk
- 25: Stellglied
- 26: Stellglied
- 27: Anschluss
- 28: Anschluss
- 29: Leitungsabschnitt
- 30: Leitungsabschnitt
- 31: Leitungsabschnitt
- 32: Rückschlagventil
- 33: Wechselventil
- 34: Leitung
- 35: Wegeventil
- 36: Tank
- 37: Stellelement
- 38: Abstreiferelement
- 39: 2. Niederhalter

## Patentansprüche

1. Aufnahmevorrichtung für eine landwirtschaftliche Erntemaschine mit einer Aufsammeltrommel (5) zum Aufsammeln von am Boden liegendem Erntegut (2), einem Erntegutkanal (7), der das aufgesammelte Erntegut aufnimmt, der durch einen Niederhalter (10; 39) begrenzt ist und dessen Weite durch Verstellen des Niederhalters (10; 39) veränderbar ist, wenigstens einem Antriebsaggregat (17, 18, 21) zum Antreiben der Aufsammeltrommel (5) und einem dem Niederhalter (10; 39) zugeordneten Stellglied (25; 26), **dadurch gekennzeichnet, dass** das Stellglied (25; 26) mit einem Mittel (34) zum Erfassen einer Last des Antriebsaggregats (17, 18, 21) verbunden ist, um die Weite des Erntegutkanals (7) entsprechend der Last einzustellen.

2. Aufnahmevorrichtung nach Anspruch 1, **dadurch gekennzeichnet, dass** das Antriebsaggregat ferner mit der Aufsammeltrommel (5) zusammenwirkende Gutfördermittel (6, 12, 13) des Erntegutkanals (7) antreibt.

3. Aufnahmevorrichtung nach Anspruch 1 oder 2, **dadurch gekennzeichnet, dass** das Antriebsaggregat (17, 18, 21) wenigstens einen Hydromotor (17) zum Antreiben wenigstens der Aufsammeltrommel (5) umfasst, dass das Stellglied (25; 26) ein hydraulisches Stellglied ist und dass das Mittel zum Erfassen der Last eine Leitung (34) zwischen einem hochdruckseitigen Anschluss des Hydromotors (17) und dem Stellglied (25; 26) ist.

4. Aufnahmevorrichtung nach Anspruch 3, **dadurch gekennzeichnet, dass** eine von dem Stellglied (25; 26) zum Erweitern des Erntegutkanals (7) aufzubringende Kraft mit der Weite des Erntegutkanals (7) zunimmt.

5. Aufnahmevorrichtung nach Anspruch 4, **gekennzeichnet durch** ein Federelement, das mit dem Niederhalter verbunden ist, um **durch** das Anheben des Niederhalters elastisch verformt zu werden.

6. Aufnahmevorrichtung nach Anspruch 4 oder 5, **dadurch gekennzeichnet, dass** der Niederhalter (10; 39) um eine Achse schwenkbar ist und die wirksame Hebelarmlänge des Stellglieds (25; 26) in Bezug auf die Achse mit der Weite des Erntegutkanals (7) abnimmt.

7. Aufnahmevorrichtung nach einem der Ansprüche 3 bis 6, **dadurch gekennzeichnet, dass** ein Wegeventil (35) zwischen einer ersten Stellung, in der es den hochdruckseitigen Anschluss mit dem hydraulischen Stellglied (25; 26) verbindet, und einer zweiten Stellung umschaltbar ist, in der es das hydraulische Stellglied (25) drucklos hält oder das hydraulische Stellglied (26) sperrt.

8. Aufnahmevorrichtung nach einem der Ansprüche 3 bis 7, **dadurch gekennzeichnet, dass** von zwei Anschlüssen des Hydromotors (17) wahlweise der eine oder der andere als Hochdruckanschluss schaltbar ist und ein Ventil (33) durch eine Druckdifferenz zwischen den beiden Anschlüssen steuerbar ist, um den jeweils als Hochdruckanschluss geschalteten Anschluss mit dem Stellglied (25, 26) zu verbinden.

9. Aufnahmevorrichtung nach einem der vorhergehenden Ansprüche, **dadurch gekennzeichnet, dass** der Niederhalter (10; 39) wenigstens eine an den Erntegutkanal (7) angrenzende Rolle (12, 13; 12) umfasst.

10. Aufnahmevorrichtung nach Anspruch 9, **dadurch gekennzeichnet, dass** die Rolle (12, 13) drehangetrieben ist.

11. Aufnahmevorrichtung nach Anspruch 10, **dadurch gekennzeichnet, dass** die Drehrichtung der Rolle (12, 13) umschaltbar ist.

12. Aufnahmevorrichtung nach einem der Ansprüche 9 bis 11, **dadurch gekennzeichnet, dass** die Rolle (12) vor der Aufsammeltrommel (5) angeordnet ist, um von der Aufsammeltrommel (5) aufzusammelndes Erntegut gegen den Boden zu drücken.

13. Aufnahmevorrichtung nach einem der Ansprüche 9 bis 12, **dadurch gekennzeichnet, dass** der Niederhalter (10) einen Arm (11), an dem das hydraulische Stellglied (25) angreift, und eine zweite Rolle umfasst und dass bei unbeweglich gehaltenem Arm (11) die zwei Rollen (12, 13) in Weitenrichtung des Erntegutkanals (7) gegeneinander bewegbar sind.

14. Aufnahmevorrichtung nach Anspruch 13, **dadurch gekennzeichnet, dass** wenigstens eine der Rollen (12, 13), vorzugsweise die vordere Rolle (12), an den Arm (11) über einen schwenkbaren Träger (19) angelenkt ist.

15. Aufnahmevorrichtung nach Anspruch 14, **dadurch gekennzeichnet, dass** ein Stellglied (26) zwischen dem Arm (11) und dem Träger (19) angeordnet ist.

## Claims

1. A pick-up apparatus for an agricultural harvester comprising a collecting drum (5) for collecting crop material (2) lying on the ground, a crop material passage (17) which receives the collected crop material and is delimited by a hold-down means (10; 39) and the width of which is variable by displacement of the hold-down means (10; 39), at least one drive assembly (17, 18, 21) for driving the collecting drum (5) and an adjusting member (25; 26) associated with the hold-down means (10; 39), **characterised in that** the adjusting member (25; 26) is connected to a means (34) for detecting a load on the drive assembly (17, 18, 21) to adjust the width of the crop material passage (7) according to the load.

2. A pick-up apparatus according to claim 1 **characterised in that** the drive assembly further drives crop conveyor means (6, 12, 13) of the crop material passage (7), that cooperate with the collecting drum (5).

3. A pick-up apparatus according to claim 1 or claim 2 **characterised in that** the drive assembly (17, 18, 21) includes at least one hydraulic motor (17) for driving at least the collecting drum (5), the adjusting member (25; 26) is a hydraulic adjusting member and the means for detecting the load is a conduit (34) between a high pressure-side connection of the hydraulic motor (17) and the adjusting member (25; 26).

4. A pick-up apparatus according to claim 3 **characterised in that** a force to be applied by the adjusting member (25; 26) for widening the crop material passage (7) increases with the width of the crop material passage (7).

5. A pick-up apparatus according to claim 4 **characterised by** a spring element connected to the hold-down means to be elastically deformed by the lifting movement of the hold-down means.

6. A pick-up apparatus according to claim 4 or claim 5 **characterised in that** the hold-down means (10; 39) is pivotable about an axis and the effective lever arm length of the adjusting member (25; 26) in relation to the axis decreases with the width of the crop material passage (7).

7. A pick-up apparatus according to one of claims 3 to 6 **characterised in that** a directional control valve (35) can be switched over between a first position in which it connects the high pressure-side connection to the hydraulic adjusting member (25; 26) and a second position in which it keeps the hydraulic adjusting member (25) pressureless or blocks the hydraulic adjusting member (26).

8. A pick-up apparatus according to one of claims 3 to 7 **characterised in that** of two connections of the hydraulic motor (17) the one or the other is selectively switchable as a high-pressure connection and a valve (33) is controllable by a pressure difference between the two connections to connect the connection respectively connected as the high-pressure connection to the adjusting member (25, 26).

9. A pick-up apparatus according to one of the preceding claims **characterised in that** the hold-down means (10; 39) includes at least one roller (12, 13; 12) adjoining the crop material passage (7).

10. A pick-up apparatus according to claim 9 **characterised in that** the roller (12, 13) is driven in rotation.

11. A pick-up apparatus according to claim 10 **characterised in that** the direction of rotation of the roller (12) can be switched over.

12. A pick-up apparatus according to one of claims 9 to 11 **characterised in that** the roller (12) is arranged upstream of the collecting drum (5) to press crop material to be collected by the collecting drum (5) against the ground.

13. A pick-up apparatus according to one of claims 9 to 12 **characterised in that** the hold-down means (10) includes an arm (11) at which the hydraulic adjusting member (25) engages and a second roller and that with the arm (11) held immobile the two rollers (12, 13) are movable relative to each other in the width direction of the crop material passage (7).

14. A pick-up apparatus according to claim 13 **characterised in that** at least one of the rollers (12, 13), preferably the front roller (12), is pivoted to the arm (11) by way of a pivotable carrier (19).

15. A pick-up apparatus according to claim 14 **characterised in that** an adjusting member (26) is arranged between the arm (11) and the carrier (19).

## Revendications

1. Dispositif de ramassage pour une machine agricole de récolte, comprenant un tambour de ramassage (5) pour ramasser un produit de récolte (2) étendu sur le sol, un canal de produit de récolte (7) qui reçoit le produit de récolte ramassé, qui est limité par un tasseur (10 ; 39) et dont la largeur est modifiable par réglage du tasseur (10 ; 39), au moins un groupe d'entraînement (17, 18, 21) pour entraîner le tambour de ramassage (5), et un organe de réglage (25 ; 26) associé au tasseur (10 ; 39), **caractérisé en ce que** l'organe de réglage (25 ; 26) est relié à un moyen (34) permettant de détecter une charge du groupe d'entraînement (17, 18, 21) afin de régler la largeur du canal de produit de récolte (7) en fonction de la charge.

2. Dispositif de ramassage selon la revendication 1, **caractérisé en ce que** le groupe d'entraînement entraîne également des moyens de transport de produit (6, 12, 13) du canal de produit de récolte (7) qui coopèrent avec le tambour de ramassage (5).

3. Dispositif de ramassage selon la revendication 1 ou 2, **caractérisé en ce que** le groupe d'entraînement (17, 18, 21) comprend au moins un moteur hydraulique (17) pour entraîner au moins le tambour de ramassage (5), **en ce que** l'organe de réglage (25 ; 26) est un organe de réglage hydraulique, et **en ce que** le moyen pour détecter la charge est une conduite (34) entre un raccord côté haute pression du moteur hydraulique (17) et l'organe de réglage (25 ; 26).

4. Dispositif de ramassage selon la revendication 3, **caractérisé en ce qu'**une force à appliquer par l'organe de réglage (25 ; 26) pour élargir le canal de produit de récolte (7) augmente avec la largeur du canal de produit de récolte (7).

5. Dispositif de ramassage selon la revendication 4, **caractérisé par** un élément faisant ressort qui est relié au tasseur de façon à être déformé élastiquement par la levée du tasseur.

6. Dispositif de ramassage selon la revendication 4 ou 5, **caractérisé en ce que** le tasseur (10 ; 39) peut pivoter autour d'un axe, et la longueur active de bras de levier de l'organe de réglage (25 ; 26) par rapport à l'axe diminue avec la largeur du canal de produit de récolte (7).

7. Dispositif de ramassage selon l'une des revendications 3 à 6, **caractérisé en ce qu'**un distributeur (35) est commutable entre une première position, dans laquelle il relie le raccord côté haute pression à l'organe de réglage hydraulique (25 ; 26), et une deuxième position, dans laquelle il maintient l'organe de réglage hydraulique (25) hors pression ou bloque l'organe de réglage hydraulique (26).

8. Dispositif de ramassage selon l'une des revendications 3 à 7, **caractérisé en ce que** l'un ou l'autre des deux raccords du moteur hydraulique (17) peut être commuté au choix en tant que raccord haute pression, et une soupape (33) peut être commandée par une différence de pression entre les deux raccords afin de relier le raccord respectivement commuté en tant que raccord haute pression à l'organe de réglage (25, 26).

9. Dispositif de ramassage selon l'une des revendications précédentes, **caractérisé en ce que** le tasseur (10 ; 39) comprend au moins un rouleau (12, 13 ; 12) adjacent au canal de produit de récolte (7).

10. Dispositif de ramassage selon la revendication 9, **caractérisé en ce que** le rouleau (12, 13) est entraîné en rotation.

11. Dispositif de ramassage selon la revendication 10, **caractérisé en ce que** le sens de rotation du rouleau (12, 13) est réversible.

12. Dispositif de ramassage selon l'une des revendications 9 à 11, **caractérisé en ce que** le rouleau (12) est disposé devant le tambour de ramassage (5) afin de presser contre le sol le produit de récolte à ramasser par le tambour de ramassage (5).

13. Dispositif de ramassage selon l'une des revendications 9 à 12, **caractérisé en ce que** le tasseur (10) comprend un bras (11) sur lequel l'organe de réglage hydraulique (25) agit, et un deuxième rouleau, et **en ce que**, lorsque le bras (11) est maintenu immobile, les deux rouleaux (12, 13) sont mobiles l'un par rapport à l'autre dans la direction de la largeur du canal de produit de récolte (7).

14. Dispositif de ramassage selon la revendication 13, **caractérisé en ce qu'**au moins un des rouleaux (12, 13), de préférence le rouleau avant (12), est articulé sur le bras (11) par l'intermédiaire d'un support pivotant (19).

15. Dispositif de ramassage selon la revendication 14, **caractérisé en ce qu'**un organe de réglage (26) est disposé entre le bras (11) et le support (19).
